# EUROPEAN PATENT SPECIFICATION

(11) **EP 3 164 901 B1**
(45) Date of publication and mention of the grant of the patent: **12.09.2018**
(21) Application number: 15736027.2
(22) Date of filing: 03.07.2015
(51) Int. Cl.: H01M 8/06, F23D 14/64, H01M 8/04014, H01M 8/04089, H01M 8/04111

(54) **FUEL CELL SYSTEM**
BRENNSTOFFZELLENSYSTEM
SYSTÈME DE PILE À COMBUSTIBLE

(30) Priority: 04.07.2014 GB 201411986
(43) Date of publication of application: 10.05.2017
(73) Proprietor: LG Fuel Cell Systems Inc., North Canton, OH 44720 (US)
(72) Inventor: BUTLER, Philip, Ashbourne Derbyshire DE6 3AF (GB); BOZZOLO, Michele, Derby DE24 1AQ (GB); DEAN, Eric, Derby Derbyshire DE3 9FS (GB); MCNEELY, Peter, Derby Derbyshire DE24 8BJ (GB); SAUNDERS, Gary, Derby Derbyshire DE65 5NA (GB)
(74) Representative: Vossius & Partner Patentanwälte Rechtsanwälte mbB
(86) International application number: PCT/GB2015/051947
(87) International publication number: WO 2016/001685

(56) References cited:
- EP-A2- 1 248 312
- WO-A1-2012/013460
- JP-A- 2003 100 335
- US-A1- 2010 209 818
- US-A1- 2010 255 386

## Description

This invention relates to a fuel cell system with an improved arrangement for mixing fuel and oxidant. The present invention relates to a high temperature fuel cell system, in particular to a solid oxide fuel cell system.

### BACKGROUND

A fuel cell is an electrochemical conversion device that produces electricity directly from oxidizing a fuel. Fuel cells are characterized by their electrolyte material; for example, a solid oxide fuel cell (SOFC) has a solid oxide or ceramic electrolyte.

Currently the main variants of the solid oxide fuel cell are the tubular solid oxide fuel cell (T-SOFC), the planar solid oxide fuel cell (P-SOFC) and the monolithic solid oxide fuel cell (M-SOFC).

The tubular solid oxide fuel cell comprises a tubular solid oxide electrolyte member which has inner and outer electrodes. Typically the inner electrode is the cathode and the outer electrode is the anode. An oxidant gas is supplied to the cathode in the interior of the tubular solid oxide electrolyte member and a fuel gas is supplied to the anode on the exterior surface of the tubular solid oxide electrolyte member. (This may be reversed). The tubular solid oxide fuel cell allows a simple cell stacking arrangement and is substantially devoid of seals. However, the fabrication of this type of solid oxide fuel cell is very sophisticated, manpower intensive and costly. Also this type of solid oxide fuel cell has a relatively low power density due to long current conduction paths through the relatively large diameter tubular cells.

The monolithic solid oxide fuel cell has two variants. The first variant has a planar solid oxide electrolyte member which has electrodes on its two major surfaces. The second variant has a corrugated solid oxide electrolyte member which has electrodes on its two major surfaces. The monolithic solid oxide fuel cell is amenable to the more simple tape casting and calendar rolling fabrication processes and promises higher power densities. This type of solid oxide fuel cell requires the co-sintering of all the fuel cell layers in the monolith from their green states. However, this results in serious shrinkage and cracking problems. This type of solid oxide fuel cell is not so easy to manifold and seal.

The planar solid oxide fuel cell is also amenable to tape casting and calendar rolling fabrication processes. Currently it requires thick, 150-200 micron, self-supported solid oxide electrolyte members which limit performance. The planar solid oxide fuel cell also has limited thermal shock resistance.

Solid oxide fuel cells require operating temperatures of around 500°C to around 1100°C to maintain low internal electrical resistances.

A SOFC has an anode loop and a cathode loop, the anode loop being supplied with a stream of fuel (typically methane), and the cathode loop being supplied with a stream of oxidant (typically air). It is a challenge to maintain such high temperatures, and a number of solutions have been proposed.

One useful way of generating heat is to burn any fuel that is still present in the fuel stream after this has passed over the anodes of a SOFC stack. A combustor may be used to complete the oxidation of depleted fuel at an outlet of the anode loop. The combustor may also take as an input hot oxidant from the cathode loop. The combustor is typically designed to produce very limited pressure losses in the fuel and oxidant flows. The combustion products are entrained by an ejector and fed to the hot side of a heat exchanger, with fresh fuel and/or oxidant being pre-heated on the cool side of the heat exchanger.

In some known solid oxide fuel cell systems, the combustion products are mixed directly with fresh oxidant and then supplied to the cathodes of the solid oxide fuel cells in order to produce a sufficient temperature rise so that the solid oxide fuel cells are at the required operating temperature. However, it has now been found that some of the combustion products such as steam, present in the combustion products supplied to the cathodes of the solid oxide fuel cells, are detrimental to the performance and durability of the solid oxide fuel cells.

WO2007/128963 discloses a fuel burner comprising a plurality of sealed fuel ducts having a first sealed edge and a second open edge. Fuel ducts are arranged substantially parallel to each other to form a plurality of oxidant passages. The fuel ducts and the oxidant passages are arranged so that the fuel is able to mix with the oxidant to provide a burner with a low-pressure drop through the burner. However, having a plurality of fuel duct plates arranged in an intricate and complex manner is expensive and difficult to manufacture.

WO2012/013460 discloses a solid oxide fuel cell system comprising a solid oxide fuel cell stack and a gas turbine engine, a compressor of the gas turbine engine arranged to supply oxidant to the cathodes of the solid oxide fuel cell stack and a fuel supply arranged to supply fuel to the anodes of the solid oxide fuel cell stack. The system is arranged such that unused oxidant and unused fuel is recycled and fed into a combustor. The combustor is arranged to supply an inlet of a heat exchanger. The advantage of the heat exchanger is that it enables the transfer of heat to the solid oxide fuel cell stack without passing combustion products such as steam which have been found to impair the performance and durability of the solid oxide fuel cell. The combustor relies on auto-ignition to light the burner. This requires the ambient burner temperature to exceed the auto-ignition temperature for the fuel mixture; the auto-ignition temperature is around 600°C. This requirement puts constraints on to the design of the start-up system. Furthermore, in order to ensure explosive mixtures cannot build up during a failure to ignite the burner, the burner requires complex and expensive safety systems to enable ignition detection of the burner. The safety system typically comprises safety critical transducers that are very expensive.

### SUMMARY

According to a first aspect, there is provided a high temperature fuel cell system comprising a high temperature fuel cell stack, a compressor, a turbine, an ejector, a combustion zone, a heat exchanger, and a fuel supply, the high temperature fuel cell stack comprising at least one high temperature fuel cell, the or each high temperature fuel cell comprising an electrolyte, an anode and a cathode, the compressor being arranged to supply at least a portion of an oxidant to the cathode of the at least one high temperature fuel cell, the fuel supply being arranged to supply fuel to the anode of the at least one high temperature fuel cell, the high temperature fuel cell stack being arranged to supply a first portion of unused oxidant from the cathode of the at least one high temperature fuel cell to the ejector, the high temperature fuel cell stack being arranged to supply a portion of the unused fuel from the anode of the at least one high temperature fuel cell to the ejector, the compressor being arranged to supply a portion of the oxidant to the ejector, the ejector being configured to entrain the unused oxidant and unused fuel by way of the portion of the oxidant supplied from the compressor so as to form a mixture of unused fuel and oxidant, wherein the ejector is provided with a primary entrainment volume, a secondary entrainment volume, a mixing volume and a discharge volume, wherein the primary entrainment volume is provided with a first inlet for the oxidant from the compressor, and wherein the secondary entrainment volume is provided with a third inlet for unused oxidant from the cathode and further provided with a second inlet for unused fuel from the anode.

Advantageously, the mixture of unused fuel and oxidant may be entrained to a combustion zone external to the ejector for combustion of the mixture of unused fuel and oxidant.

The combustion zone may be configured to supply exhaust gases from the combustion of the mixture of unused fuel and oxidant to a first inlet of a heat exchanger.

The heat exchanger may be arranged to supply at least a portion of the exhaust gases from a first outlet of the heat exchanger to the turbine.

The at least a portion of the oxidant from the compressor and a second portion of the unused oxidant from the cathode of the at least one high temperature fuel cell may be supplied to a second inlet of the heat exchanger to preheat the oxidant supplied to the cathode of the at least one high temperature fuel cell.

The heat exchanger may be arranged to supply the at least a portion of the oxidant from the compressor and the second portion of the unused oxidant from the cathode of the at least one high temperature fuel cell from a second outlet of the heat exchanger to the cathode of the at least one high temperature fuel cell.

The arrangement of the ejector having three inlets (i.e. the oxidant from the compressor, the unused oxidant from the cathode and the unused fuel from the anode) provides very high shear mixing of the unused oxidant and unused fuel. The ejector is driven by the oxidant from the compressor, and the geometry of the inlet nozzles can be configured to promote very high gas velocities throughout the ejector. The mixing process through the ejector is so rapid that energy transfer in the mixture does not have sufficient time to take place within the ejector itself, and the millisecond delay in the transfer of energy between the fuel and oxidant is enough time for the mixture of unused fuel and oxidant to exit the ejector into a downstream combustion zone where the mixture of unused fuel and oxidant subsequently combusts.

It is important that the ejector is capable of high shear mixing as there is a danger that if the mixing process is not sufficiently rapid, the mixture may ignite within the ejector.

The benefit of the three inlet ejectors and the separate combustion zone is that the ejector fully premixes the unused fuel and oxidant streams before auto-ignition is possible. The mixture of unused fuel and oxidant burns more efficiently in this pre-mixed state and the release of harmful nitrogen oxides (NOx) gases is reduced.

Furthermore, by mixing the unused fuel and oxidant within the ejector a combustor can be omitted from the high temperature fuel cell system since the ejector carries out the process of mixing the unused fuel and oxidant and passing the mixture to a combustion zone.

The combustion zone may be a volume or dedicated space for combustion of the pre-mixed unused fuel and unused oxidant. The mixture formed in the ejector may auto-ignite within the combustion zone.

An aerodynamic recycle zone may be provided in the combustion zone to stabilize homogeneous non-catalytic combustion.

A catalytic oxidation reactor may be located downstream of the ejector and combustion zone. A catalytic oxidation reactor may assist in cold start-up of the high temperature fuel cell system, mainly for ignition at lower temperatures during a warm-up phase. Alternatively, an igniter, or a glow plug, may be used in place of the catalytic oxidation reactor to achieve combustion at lower than auto-ignition temperatures.

A single or double catalytic bed reactor may be located downstream of the catalytic oxidation reactor to complete oxidation of carbon monoxide gas (CO).

The catalytic oxidation reactor and/or the single or double catalytic bed reactor may be combined with the heat exchanger. Alternatively, the heat exchanger may be used as a second catalytic bed reactor for CO conversion.

The primary oxidant supply drives the high shear mixing process of the unused oxidant from the cathode and the unused fuel from the anode.

The mixing volume and the discharge volume entrain the mixture of unused fuel and oxidant towards the combustion zone. The combustible mixture may leave the ejector unconverted because the ignition delay of the combustible mixture is greater than the residence time in the ejector.

Fully pre-mixed combustion may be achieved which may minimise the combustion temperature and minimise associated NOx production. By reducing the combustion temperature, the life times of the components are typically maximised since they experience less thermal stress.

Furthermore, the ejector recycle performance may benefit from the colder entrained flow from the primary oxidant supply.

The combustion zone may be integrated at the outlet from the ejector using a sudden expansion of the tertiary entrainment volume. At the sudden expansion from the outlet of the ejector to the combustion zone, the cross-sectional area of the upstream end of the combustion zone is at least twice the cross-sectional area of the outlet of the ejector. The sudden expansion creating an integrated combustion zone may create a local flow recycle similar to a dump diffuser. The flow path of the combustible mixture may experience eddy currents in the flow field which may lead to an increased residence time of the combustible mixture in the combustion zone. The benefit of increasing the residence time of the combustible mixture in the combustion zone is that the increased residence time enables the combustion reaction to be maintained in a confined zone, e.g. within the combustion zone, and avoids the possibility of combustion propagating downstream of the combustion zone. Reducing the possibility of combustion propagating downstream of the combustion zone provides a safer fuel cell system.

An additional fuel supply may be arranged to supply fuel to the ejector. The additional fuel supply is used at start-up of the high temperature fuel cell system.

The high temperature fuel cell stack may be a solid oxide fuel cell stack or a molten carbonate fuel cell stack.

According to a second aspect, there is provided a fuel recycling apparatus for use in a high temperature fuel cell system, the fuel recycling apparatus comprising an ejector and a combustion zone, wherein the ejector is provided with a primary entrainment volume, a secondary entrainment volume, a mixing volume and a discharge volume, wherein the primary entrainment volume is provided with a first inlet for primary oxidant from the compressor, and wherein the secondary entrainment volume is provided with a third inlet for unused oxidant from the cathode and further provided with a second inlet for unused fuel from the anode.

### BRIEF DESCRIPTION OF THE DRAWINGS

Embodiments of the invention are further described hereinafter with reference to the accompanying drawings, in which:
Figure 1 shows a solid oxide fuel cell system;
Figure 2 shows a fuel recycling apparatus including an ejector;
Figure 3 shows a fuel recycling apparatus including an ejector having integral combustion zone.

### DETAILED DESCRIPTION

In the described embodiments, like features have been identified with like numerals, albeit in some cases having increments of integer multiples of 100. For example, in different figures, 30 and 230 have been used to indicate an ejector.

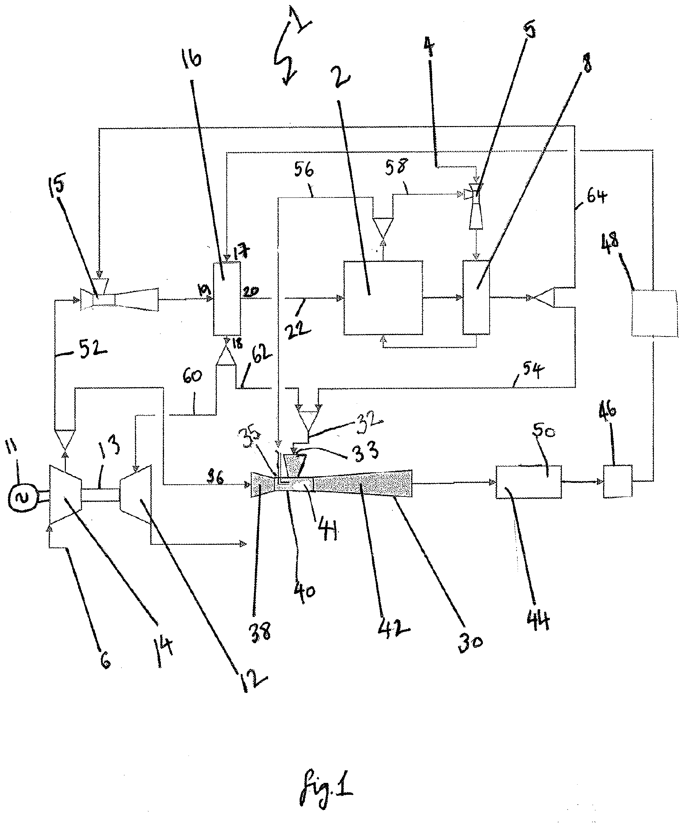

Figure 1 shows a solid oxide fuel cell system 1 comprising a solid oxide fuel cell stack 2, a compressor 14 and a turbine 12. The solid oxide fuel cell stack 2 includes at least one solid oxide fuel cell having an electrolyte, an anode and a cathode. The compressor 14 is arranged to supply at least a portion of the oxidant 52 from an oxidant supply 6 to the cathode of the at least one solid oxide fuel cell and a fuel supply 4 is arranged to supply fuel to the anode of the at least one solid oxide fuel cell. The solid oxide fuel cell stack 2 is arranged to supply a first portion 54 of the unused oxidant from the cathode of the at least one solid oxide fuel cell to an ejector 30, the solid oxide fuel cell stack 2 is arranged to supply a first portion of the unused fuel 56 from the anode of the at least one solid oxide fuel cell to the ejector 30. The compressor 14 is arranged to supply a portion of the oxidant 36 from the oxidant supply 6 to the ejector 30. The turbine 12 is arranged to drive the compressor 14 via a shaft 13 and the turbine 12 is also arranged to drive an electrical generator 11.

The fuel supply 4 is arranged to supply fuel to the anode of the at least one solid oxide fuel cell in the solid oxide fuel cell stack 2 via an ejector 5 and a second portion of the unused fuel 58 from the anode of the at least one solid oxide fuel cell is supplied to the ejector 5 to be recycled to the anode of the at least one solid oxide fuel cell.

The ejector 30 entrains and mixes the unused oxidant from the cathodes of the solid oxide fuel cells in the solid oxide fuel cell stack 2, the unused fuel from the anodes of the solid oxide fuel cells and the oxidant supplied from the compressor 14 and supplies this mixture to a combustion zone 44 for combustion. The combustion zone 44 is a volume or dedicated space for combustion of the pre-mixed unused fuel and unused oxidant. The mixture formed in the ejector 30 auto-ignites within the combustion zone 44.

The combustion zone 44 is arranged to supply combustion products to a first inlet 17 of a heat exchanger 16. However, intermediate components, for example a further aerodynamic recycle zone 50 may be provided to stabilise the homogeneous non-catalytic combustion.

A catalytic oxidation reactor 46 is located downstream of the ejector 30 and combustion zone 44. The catalytic oxidation reactor 46 assists in cold start-up of the solid oxide fuel cell system 1. This is particularly beneficial for ignition at lower temperatures during the warm-up phase or start-up of the solid oxide fuel cell system 1. Alternatively, an igniter, or a glow plug, may be used in place of the catalytic oxidation reactor to achieve combustion at lower than auto-ignition temperatures.

A single, or double, catalytic bed reactor 48 may be located downstream of the catalytic oxidation reactor 46 to complete the oxidation of carbon monoxide gas (CO) to carbon dioxide gas (CO₂).

The catalytic oxidation reactor 46 and/or the single or double catalytic bed reactor 48 may be combined with the heat exchanger 16. Alternatively, the heat exchanger 16 may be used as a second catalytic bed reactor for CO conversion to CO₂ if there is incomplete combustion in the catalytic oxidation reactor 46. A heat exchanger used as a catalytic oxidation reactor, a single or double catalytic bed reactor or a second catalytic bed reactor has a catalyst applied to the surfaces of the corresponding flow passages within the heat exchanger. In order to complete the conversion of CO to CO₂ a long residence time on the catalyst coated surfaces may be required. The advantage of using the heat exchanger as a catalytic oxidation reactor, a single or double catalytic bed reactor or a second catalytic bed reactor is that the heat exchanger provides a very large surface area, due to the flow passages within the heat exchanger and hence a large surface area of catalyst coated surfaces of the flow passages, for the conversion reaction to take place. In addition the combination of a heat exchanger and a catalytic oxidation reactor, a single or double catalytic bed reactor or a second catalytic bed reactor results in a cost saving.

The heat exchanger 16 is arranged to supply at least a portion of the exhaust gases 60 from the first outlet 18 of the heat exchanger 16 to the turbine 12. The heat exchanger 16 is arranged to supply a portion of the exhaust gases 62 from the first outlet 18 of the heat exchanger 16 to the ejector 30 and these exhaust gases are supplied into the ejector 30 with the unused oxidant 54 from the cathode of the at least one solid oxide fuel cell of the solid oxide fuel cell stack 2. The heat exchanger 16 enables the transfer of heat to the oxidant (to preheat the oxidant before it reaches the solid oxide fuel cell stack 2) without allowing harmful combustion products such as steam to enter the oxidant stream 22 and enter the solid oxide fuel cell stack 2.

The portion of the oxidant 52 from the compressor 14 and a second portion 64 of the unused oxidant from the cathode of the at least one solid oxide fuel cell of the solid oxide fuel cell stack 2 is supplied to a second inlet 19 of the heat exchanger 16 via an ejector 15 to preheat the oxidant stream 22 supplied to the cathode of the at least one solid oxide fuel cell of the solid oxide fuel cell stack 2. The portion of the oxidant 52 from the compressor 14 and the second portion of unused oxidant 64 from the cathode of the at least one solid oxide fuel cell of the solid oxide fuel cell stack 2 are mixed together in the ejector 15.

The heat exchanger 16 is arranged to supply the at least a portion of the oxidant from the compressor 14 and the second portion of the unused oxidant 64 from the cathode of the at least one solid oxide fuel cell of the solid oxide fuel cell stack 2 from a second outlet 20 of the heat exchanger 16 to the cathode of the at least one solid oxide fuel cell of the solid oxide fuel cell stack 2. In this arrangement the oxidant stream 22 is preheated by the combustion product of the recycled fuel and recycled oxidant flowing through the heat exchanger 16.

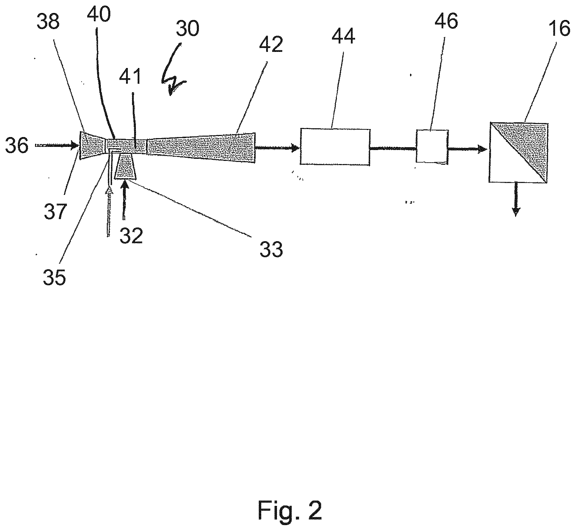

The ejector 30 is shown in Figure 2. The ejector 30 comprises a primary entrainment volume 38, a secondary entrainment volume 40, a mixing volume 41 and a discharge volume 42. The ejector 30 entrains a portion of the primary oxidant 36 through the primary entrainment volume 38. The primary entrainment volume 38 is provided with a first inlet 37 for the portion of the primary oxidant to enter the primary entrainment volume 38. The portion of the primary oxidant 36 drives the mixing process of the combination 32 of unused oxidant 54 and exhaust gases 62 from the heat exchanger 16, and the unused fuel 56 to form a pre-mixed mixture within the mixing volume 41 and the discharge volume 42. The secondary entrainment volume 40 is provided with a second inlet 35 for the unused fuel supply and a third inlet 33 for the unused oxidant supply to enter the secondary entrainment volume 40. The third inlet 33 is also an inlet for a portion of the exhaust gases 62 from the first outlet 18 of the heat exchanger 16 to enter the secondary entrainment volume 40. The second inlet 35 and the third inlet 33 are provided within the secondary entrainment volume 40 as close as possible to the mixing volume 41. The primary entrainment volume 38 comprises a duct converging in a direction towards the secondary entrainment volume 40, e.g. the cross-sectional area of the duct reduces from the inlet 37 to the secondary entrainment volume 40. The secondary entrainment volume 40 comprises a duct converging in a direction towards the mixing volume 41 e.g. the cross-sectional area of the duct reduces from the primary entrainment volume 38 to the mixing volume 41. The primary entrainment volume 38 and the secondary entrainment volume 40 are preferably parts of a single converging duct. The mixing volume 41 comprises a cylindrical duct which has a uniform cross-sectional area along its length. However, the mixing volume 41 may comprise a duct diverging in a direction towards the discharge volume 42, e.g. the cross-sectional area increases from the secondary mixing volume 40 to the discharge volume 42. The discharge volume 42 comprises a duct diverging in a direction away from the mixing volume 41 e.g. the cross-sectional area of the duct increases from the mixing volume 41 to the outlet 43 of the discharge volume 42. The discharge volume 42 defines a diffuser for the mixture of unused fuel and unused oxidant. The second inlet 35 and the third inlet 33 may be inlet nozzles.

The arrangement of the ejector 30 having three inlets (i.e. for the portion of the primary oxidant, the unused oxidant from the cathode, the unused fuel from the anode and the portion of exhaust gases from the heat exchanger) provides very high shear mixing of the unused oxidant and unused fuel. The geometry of the inlet nozzles promotes very high gas velocities throughout the ejector.

The residence time of the primary air, unused oxidant and unused fuel within the ejector 30 is less than the time required for the energy transfer of the fuel and oxidant mixture and therefore the combustible substances do not combust within the ejector 30. The millisecond delay in the transfer of energy between the fuel and oxidant is sufficient enough time for the pre-mixed fuel oxidant mixture to exit the ejector 30 into a downstream combustion zone 44 where the pre-mixed fuel and oxidant subsequently combust.

The ejector 30 is capable of high shear mixing due to the geometry of the inlet nozzles for the portion of the primary oxidant stream 36, unused oxidant stream 54, unused fuel stream 56 and the portion of exhaust gases from the heat exchanger. If the nozzles do not deliver high velocity streams, there is a danger that the mixing process is not sufficiently rapid, and the mixture may ignite within the ejector 30 (i.e. causing flash back within the ejector).

The benefit of the three inlet ejector arrangement and separate combustion zone is that the ejector fully premixes the unused fuel and the primary and unused oxidant streams before auto-ignition is possible. The pre-mixed fuel and oxidant burn more efficiently in this pre-mixed state and the release of harmful mono-nitrogen oxides (NOₓ) gases is reduced.

Furthermore, by mixing the unused fuel and primary and unused oxidant within the ejector a combustor can be omitted from the solid oxide fuel cell system since the ejector carries out the process of mixing the fuel and oxidant to a combustion zone.

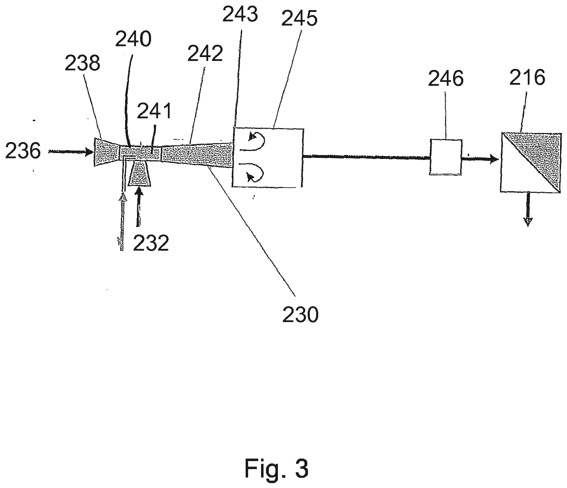

Figure 3 shows an ejector 230 coupled with a combustion zone 245. The combustion zone 245 is integrated at the outlet 243 of the ejector 230. There is a sudden expansion from the outlet 243 of the ejector 230 to the combustion zone 245, the cross-sectional area of the upstream end of the combustion zone is at least twice the cross-sectional area of the outlet 243 of the ejector 230. The sudden expansion from the outlet 243 of the ejector 230 to the combustion zone 245 provides an increase in volume which is available for the pre-mixed fuel and oxidant mixture to create local flow recycling. The flow profile within the combustion zone 245 forms eddy type currents and consequently extends the residence time within the combustion zone 245. Extending the residence time within the combustion zone 245 contributes to improved combustion of the pre-mixed fuel and oxidant mixture.

During start-up of the solid oxide fuel cell system 1, additional fuel may be injected into the ejector 30, in particular into the secondary entrainment volume 40. The fuel may be injected into the ejector 30 using the second inlet 35 or an additional inlet (not shown). The fuel injected into the ejector 30 during start-up of the solid oxide fuel cell system 1 may be natural gas, hydrogen, a mixture of hydrogen and carbon monoxide, other suitable hydrocarbons or other suitable fuels. A valve is provided to allow the supply of fuel during start-up and to prevent the supply of fuel during normal operation of the solid oxide fuel cell system. The fuel is supplied during start-up of the solid oxide fuel cell system 1 to heat the solid oxide fuel cell stack 2 to operating temperature by heating the oxidant supplied through the heat exchanger 16 to the solid oxide fuel cell stack 2.

The ejector 30 acts as a fuel and oxidant mixer above auto-ignition conditions, temperatures. The ejector 30 also acts as a fuel and oxidant mixer below auto-ignition conditions, and acts as a fuel and oxidant mixer during warm-up, or start-up, of the solid oxide fuel cell system.

In the particular example of a solid oxide fuel cell system the oxidant supply may be an oxygen supply or an air supply and the fuel supply may be a hydrogen supply or the fuel supply may comprise a reformer or processer to produce hydrogen.

Although the present invention has been described with reference to a solid oxide fuel cell system comprising a solid oxide fuel cell stack consisting of solid oxide fuel cells the present invention is equally applicable to a molten carbonate fuel cell system comprising a molten carbonate fuel cell stack consisting of molten carbonate fuel cells or other high temperature fuel cell systems comprising high temperature fuel cell stacks consisting of high temperature fuel cells. High temperature fuel cells operate at temperatures in the region of 500°C to 1100°C, for example solid oxide fuel cells operate at temperatures in the region of 500°C to 1100°C, e.g. 850°C to 1100°C and molten carbonate fuel cells operate at temperatures in the region of 600°C to 700°C.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps.

## Claims

1. A high temperature fuel cell system comprising
a high temperature fuel cell stack (2),
a compressor (14),
a turbine (12), and
an ejector (30),the high temperature fuel cell stack comprising at least one high temperature fuel cell, the or each high temperature fuel cell comprising
an electrolyte,
an anode and
a cathode,
the compressor being arranged to supply at least a portion of an oxidant to the cathode of the at least one high temperature fuel cell,
the fuel supply being arranged to supply fuel to the anode of the at least one high temperature fuel cell,
the high temperature fuel cell stack being arranged to supply a first portion of unused oxidant from the cathode of the at least one high temperature fuel cell to the ejector,
the high temperature fuel cell stack being arranged to supply a portion of the unused fuel from the anode of the at least one high temperature fuel cell to the ejector,
the compressor being arranged to supply a portion of the oxidant to the ejector,
the ejector being configured to entrain the unused oxidant and unused fuel by way of the portion of the oxidant supplied by the compressor so as to form a mixture of unused fuel and oxidant,
wherein the ejector is provided with a primary entrainment volume (38), a secondary entrainment volume (40), a mixing volume (41) and a discharge volume (42),
wherein the primary entrainment volume is provided with a first inlet (37) for the oxidant from the compressor, and
wherein the secondary entrainment volume is provided with a third inlet (33) for unused oxidant from the cathode and further provided with a second inlet (35) for unused fuel from the anode.

2. A high temperature fuel cell system as claimed in claim 1, wherein each of the first inlet, second inlet and third inlet are provided with an inlet nozzle.

3. A high temperature fuel cell system as claim 1 or claim 2, wherein the mixture that is entrained to a combustion zone (44) external to the ejector for combustion of the mixture.

4. A high temperature fuel cell system as claimed in claim 3, wherein the combustion zone is integrated at an outlet of the ejector.

5. A high temperature fuel cell system as claimed in claim 3 or 4, wherein the combustion zone is configured to supply a combustion product from the combustion of the mixture to a first inlet (17) of a heat exchanger (16).

6. A high temperature fuel cell system as claimed in claim 5, wherein the heat exchanger is arranged to supply at least a portion of the exhaust gas from a first outlet of the heat exchanger to the turbine.

7. A high temperature fuel cell system as claimed in claim 5 or claim 6, wherein the at least a portion of the oxidant from the compressor and a second portion of the unused oxidant from the cathode of the at least one high temperature fuel cell is supplied to a second inlet of the heat exchanger.

8. A high temperature fuel cell system as claimed in any of claims 5 to 7, wherein the heat exchanger is arranged to preheat at least a second portion of oxidant from the compressor and a second portion of unused oxidant from the cathode of the at least one high temperature fuel cell that is supplied from a second outlet of the heat exchanger to the cathode of the at least one high temperature fuel cell.

9. A high temperature fuel cell system as claimed in any of claims 3 to 8, wherein an aerodynamic recycle zone is provided in the combustion zone.

10. A high temperature fuel cell system as claimed in any of claims 3 to 9, wherein a catalytic oxidation reactor is located downstream of the ejector and combustion zone, and/or wherein an igniter or a glow plug is located downstream of the ejector and combustion zone.

11. A high temperature fuel cell system as claimed in claim 10, wherein a catalytic oxidation reactor is located downstream of the ejector and combustion zone, and wherein a single or double catalytic bed reactor is located downstream of the catalytic oxidation reactor.

12. A high temperature fuel cell system as claimed in 11, wherein the catalytic oxidation reactor and/or the single or double catalytic bed reactor is combined with the heat exchanger.

13. A high temperature fuel cell system as claimed in any preceding claim, wherein an additional fuel supply is arranged to supply fuel to the ejector.

14. A high temperature fuel cell system as claimed in any preceding claim, wherein the high temperature fuel cell stack is a solid oxide fuel cell stack.

15. A fuel recycling apparatus suitable for use in a high temperature fuel cell system, the fuel recycling apparatus comprising
an ejector (30) and
a combustion zone (44),
wherein the ejector is provided with a primary entrainment volume (38), a secondary entrainment volume (40), a mixing volume (41) and a discharge volume (42),
wherein the primary entrainment volume is provided with a first inlet (37) for primary oxidant from the compressor, and
wherein the secondary entrainment volume is provided with a third inlet (33) for unused oxidant from the cathode and further provided with a second inlet (35) for unused fuel from the anode.

## Patentansprüche

1. Hochtemperatur-Brennstoffzellensystem, das aufweist:
einen Hochtemperatur-Brennstoffzellenstapel (2),
einen Verdichter (14),
eine Turbine (12) und
einen Ejektor (30), wobei der Hochtemperatur-Brennstoffzellenstapel mindestens eine Hochtemperatur-Brennstoffzelle aufweist, wobei die oder jede Hochtemperatur-Brennstoffzelle aufweist:
einen Elektrolyt,
eine Anode und
eine Kathode,
wobei der Verdichter eingerichtet ist, der Kathode der mindestens einen Hochtemperatur-Brennstoffzelle mindestens einen Anteil eines Oxidationsmittels zuzuführen,
wobei die Brennstoffzufuhr eingerichtet ist, der Anode der mindestens einen Hochtemperatur-Brennstoffzelle Brennstoff zuzuführen,
wobei der Hochtemperatur-Brennstoffzellenstapel eingerichtet ist, dem Ejektor von der Kathode der mindestens einen Hochtemperatur-Brennstoffzelle einen ersten Anteil eines ungenutzten Oxidationsmittels zuzuführen,
wobei der Hochtemperatur-Brennstoffzellenstapel eingerichtet ist, dem Ejektor von der Anode der mindestens einen Hochtemperatur-Brennstoffzelle einen Anteil des ungenutzten Brennstoffs zuzuführen,
wobei der Verdichter eingerichtet ist, dem Ejektor einen Anteil des Oxidationsmittels zuzuführen,
wobei der Ejektor konfiguriert ist, das ungenutzte Oxidationsmittel und den ungenutzten Brennstoff über den Anteil des Oxidationsmittels mitzureißen, das durch den Verdichter zugeführt wird, um eine Mischung aus ungenutztem Brennstoff und Oxidationsmittel zu bilden,
wobei der Ejektor mit einem primären Mitreißvolumen (38), einem sekundären Mitreißvolumen (40), einem Mischvolumen (41) und einem Ausstoßvolumen (42) versehen ist,
wobei das primäre Mitreißvolumen mit einem ersten Einlass (37) für das Oxidationsmittel aus dem Verdichter versehen ist, und
wobei das sekundäre Mitreißvolumen mit einem dritten Einlass (33) für ungenutztes Oxidationsmittel von der Kathode versehen ist und ferner mit einem zweiten Einlass (35) für ungenutzten Brennstoff von der Anode versehen ist.

2. Hochtemperatur-Brennstoffzellensystem nach Anspruch 1, wobei jeweils der erste Einlass, der zweite Einlass und der dritte Einlass mit einer Einlassdüse versehen sind.

3. Hochtemperatur-Brennstoffzellensystem nach Anspruch 1 oder 2, wobei die Mischung zu einer Verbrennungszone (44) außerhalb des Ejektors zur Verbrennung der Mischung mitgerissen wird.

4. Hochtemperatur-Brennstoffzellensystem nach Anspruch 3, wobei die Verbrennungszone an einem Auslass des Ejektors integriert ist.

5. Hochtemperatur-Brennstoffzellensystem nach Anspruch 3 oder 4, wobei die Verbrennungszone konfiguriert ist, ein Verbrennungsprodukt aus der Verbrennung der Mischung einem ersten Einlass (17) eines Wärmetauschers (16) zuzuführen.

6. Hochtemperatur-Brennstoffzellensystem nach Anspruch 5, wobei der Wärmetauscher eingerichtet ist, mindestens einen Anteil des Abgases aus einem ersten Auslass des Wärmetauschers der Turbine zuzuführen.

7. Hochtemperatur-Brennstoffzellensystem nach Anspruch 5 oder 6, wobei der mindestens eine Anteil des Oxidationsmittels aus dem Verdichter und ein zweiter Anteil des ungenutzten Oxidationsmittels von der Kathode der mindestens einen Hochtemperatur-Brennstoffzelle einem zweiten Einlass des Wärmetauschers zugeführt werden.

8. Hochtemperatur-Brennstoffzellensystem nach einem der Ansprüche 5 bis 7, wobei der Wärmetauscher eingerichtet ist, mindestens einen zweiten Anteil des Oxidationsmittels aus dem Verdichter und einen zweiten Anteil des ungenutzten Oxidationsmittels von der Kathode der mindestens einen Hochtemperatur-Brennstoffzelle vorzuwärmen, der aus einem zweiten Auslass des Wärmetauschers der Kathode der mindestens einen Hochtemperatur-Brennstoffzelle zugeführt wird.

9. Hochtemperatur-Brennstoffzellensystem nach einem der Ansprüche 3 bis 8, wobei eine aerodynamische Wiederverwertungszone in der Verbrennungszone vorgesehen ist.

10. Hochtemperatur-Brennstoffzellensystem nach einem der Ansprüche 3 bis 9, wobei ein katalytischer Oxidationsreaktor nachgelagert vom Ejektor und von der Verbrennungszone angeordnet ist, und/oder wobei eine Zündvorrichtung oder eine Glühkerze nachgelagert vom Ejektor und von der Verbrennungszone angeordnet ist.

11. Hochtemperatur-Brennstoffzellensystem nach Anspruch 10, wobei ein katalytischer Oxidationsreaktor nachgelagert vom Ejektor und von der Verbrennungszone angeordnet ist, und wobei ein einzelner oder doppelter katalytischer Bettreaktor nachgelagert vom katalytischen Oxidationsreaktor angeordnet ist.

12. Hochtemperatur-Brennstoffzellensystem nach Anspruch 11, wobei der katalytische Oxidationsreaktor und/oder der einzelne oder doppelte katalytische Bettreaktor mit dem Wärmetauscher kombiniert ist.

13. Hochtemperatur-Brennstoffzellensystem nach einem der vorhergehenden Ansprüche, wobei eine zusätzliche Brennstoffzufuhr eingerichtet ist, dem Ejektor Brennstoff zuzuführen.

14. Hochtemperatur-Brennstoffzellensystem nach einem der vorhergehenden Ansprüche, wobei der Hochtemperatur-Brennstoffzellenstapel ein Festoxidbrennstoffzellenstapel ist.

15. Brennstoffwiederverwertungsvorrichtung, die zur Verwendung in einem Hochtemperatur-Brennstoffzellensystem geeignet ist, wobei die Brennstoffwiederverwertungsvorrichtung aufweist:
einen Ejektor (30) und
eine Verbrennungszone (44),
wobei der Ejektor mit einem primären Mitreißvolumen (38), einem sekundären Mitreißvolumen (40), einem Mischvolumen (41) und einem Ausstoßvolumen (42) versehen ist,
wobei das primäre Mitreißvolumen mit einem ersten Einlass (37) für ein primäres Oxidationsmittel aus dem Verdichter versehen ist, und
wobei das sekundäre Mitreißvolumen mit einem dritten Einlass (33) für ein ungenutztes Oxidationsmittel von der Kathode versehen ist und ferner mit einem zweiten Einlass (35) für einen ungenutzten Brennstoff von der Anode versehen ist.

## Revendications

1. Système de pile à combustible haute température, comprenant
une pile de cellules à combustible haute température (2),
un compresseur (14),
une turbine (12), et
un éjecteur (30), la pile de cellules à combustible haute température comprenant au moins une cellule à combustible haute température, la cellule ou chaque cellule à combustible haute température comprenant
un électrolyte,
une anode et
une cathode,
le compresseur étant prévu pour alimenter la cathode de ladite au moins une cellule à combustible haute température avec au moins une partie d'un oxydant,
l'alimentation en combustible étant prévue pour alimenter en combustible l'anode de ladite au moins une cellule à combustible haute température,
la pile de cellules à combustible haute température étant prévue pour alimenter l'éjecteur avec une première partie de l'oxydant inutilisé par la cathode de ladite au moins une cellule à combustible haute température,
la pile de cellules à combustible haute température étant prévue pour alimenter l'éjecteur avec une partie du combustible inutilisé par l'anode de ladite au moins une cellule à combustible haute température,
le compresseur étant prévu pour alimenter l'éjecteur avec une partie de l'oxydant, l'éjecteur étant prévu pour entraîner l'oxydant inutilisé et le combustible inutilisé au moyen de la partie de l'oxydant refoulé par le compresseur de manière à former un mélange de combustible et d'oxydant inutilisés,
l'éjecteur étant pourvu d'un volume d'entraînement primaire (38), d'un volume d'entraînement secondaire (40), d'un volume de mélange (41) et d'un volume d'évacuation (42),
le volume d'entraînement primaire étant pourvu d'une première entrée (37) pour l'oxydant du compresseur, et
le volume d'entraînement secondaire étant pourvu d'une troisième entrée (33) pour l'oxydant inutilisé par la cathode et étant également pourvu d'une deuxième entrée (35) pour le combustible inutilisé par l'anode.

2. Système de pile à combustible haute température selon la revendication 1, où la première entrée, la deuxième entrée et la troisième entrée sont pourvues chacune d'une buse d'entrée.

3. Système de pile à combustible haute température selon la revendication 1 ou la revendication 2, où le mélange est entraîné vers une zone de combustion (44) extérieure à l'éjecteur pour la combustion du mélange.

4. Système de pile à combustible haute température selon la revendication 3, où la zone de combustion est intégrée à une sortie de l'éjecteur.

5. Système de pile à combustible haute température selon la revendication 3 ou la revendication 4, où la zone de combustion est prévue pour alimenter une première entrée (17) d'un échangeur de chaleur (16) avec un produit de combustion du mélange.

6. Système de pile à combustible haute température selon la revendication 5, où l'échangeur de chaleur est prévu pour alimenter la turbine avec au moins une partie du gaz d'échappement d'une première sortie de l'échangeur de chaleur.

7. Système de pile à combustible haute température selon la revendication 5 ou la revendication 6, où une deuxième entrée de l'échangeur de chaleur est alimentée avec ladite au moins une partie de l'oxydant du compresseur et une deuxième partie de l'oxydant inutilisé par la cathode de ladite au moins une cellule à combustible haute température.

8. Système de pile à combustible haute température selon l'une des revendications 5 à 7, où l'échangeur de chaleur est prévu pour préchauffer au moins une deuxième partie d'oxydant du compresseur et une deuxième partie d'oxydant inutilisé par la cathode de ladite au moins une cellule à combustible haute température refoulée depuis une deuxième sortie de l'échangeur de chaleur vers la cathode de ladite au moins une cellule à combustible haute température.

9. Système de pile à combustible haute température selon l'une des revendications 3 à 8, où une zone de recyclage aérodynamique est prévue dans la zone de combustion.

10. Système de pile à combustible haute température selon l'une des revendications 3 à 9, où un réacteur d'oxydation catalytique est situé en aval de l'éjecteur et de la zone de combustion, et/ou où un allumeur ou une bougie de préchauffage sont situés en aval de l'éjecteur et de la zone de combustion.

11. Système de pile à combustible haute température selon la revendication 10, où un réacteur d'oxydation catalytique est situé en aval de l'éjecteur et de la zone de combustion, et où un réacteur à lit catalytique simple ou double est situé en aval du réacteur d'oxydation catalytique.

12. Système de pile à combustible haute température selon la revendication 11, où le réacteur d'oxydation catalytique et/ou le réacteur à lit catalytique simple ou double sont combinés à l'échangeur de chaleur.

13. Système de pile à combustible haute température selon l'une des revendications précédentes, où une alimentation additionnelle en combustible est prévue pour alimenter l'éjecteur en combustible.

14. Système de pile à combustible haute température selon l'une des revendications précédentes, où la pile de cellules à combustible haute température est une pile de cellules à combustible à oxyde solide.

15. Dispositif de recyclage de combustible adapté pour une utilisation dans un système de pile à combustible haute température, ledit dispositif de recyclage de combustible comprenant
un éjecteur (30) et
une zone de combustion (44),
l'éjecteur étant pourvu d'un volume d'entraînement primaire (38), un volume d'entraînement secondaire (40), un volume de mélange (41) et un volume d'évacuation (42),
le volume d'entraînement primaire étant pourvu d'une première entrée (37) pour un oxydant primaire du compresseur, et
le volume d'entraînement secondaire étant pourvu d'une troisième entrée (33) pour l'oxydant inutilisé par la cathode et également pourvu d'une deuxième entrée (35) pour le combustible inutilisé par l'anode.
